Europäisches Patentamt

European Patent Office

Office européen des brevets

(19)

(11) **EP 1 230 751 B1**

(12) **EUROPEAN PATENT SPECIFICATION**

(45) Date of publication and mention
of the grant of the patent:
**22.06.2005 Bulletin 2005/25**

(51) Int Cl.⁷: **H04B 7/26**

(86) International application number:
**PCT/EP2000/009517**

(21) Application number: **00964247.1**

(22) Date of filing: **28.09.2000**

(87) International publication number:
**WO 2001/024411 (05.04.2001 Gazette 2001/14)**

(54) **METHOD AND SYSTEM FOR MAINTAINING UPLINK SYNCHRONIZATION IN CDMA BASED MOBILE COMMUNICATION SYSTEMS**

SYSTEM UND VERFAHREN ZUR AUFRECHTERHALTUNG DER AUFWÄRTSSYNCHRONISATION IN EINEM CDMA-KOMMUNIKATIONSSYSTEM

PROCEDE ET SYSTEME PERMETTANT DE MAINTENIR UNE SYNCHRONISATION DE LIAISON MONTANTE DANS DES SYSTEMES DE COMMUNICATION MOBILES BASES SUR UN AMRC

(84) Designated Contracting States:
**DE ES FR GB IT**

(30) Priority: **28.09.1999 CN 99122482**

(43) Date of publication of application:
**14.08.2002 Bulletin 2002/33**

(73) Proprietors:
• **SIEMENS AKTIENGESELLSCHAFT**
**80333 München (DE)**
• **Siemens Ltd. China**
**Beijing 100102 (CN)**

(72) Inventors:
• **BENZ, Michael**
**13629 Berlin (DE)**

• **SONG, Xiaoqin**
**TJ-100029 Beijing / Shao Yao (CN)**

(74) Representative: **Berg, Peter, Dipl.-Ing. et al**
**European Patent Attorney,**
**Siemens AG,**
**Postfach 22 16 34**
**80506 München (DE)**

(56) References cited:
**EP-A- 0 673 130          US-A- 5 229 996**
**US-A- 5 446 727**

• **NEE VAN R D J: "TIMING ASPECTS OF SYNCHRONOUS CDMA" IEEE INTERNATIONAL SYMPOSIUM ON PERSONAL, INDOOR AND MOBILE RADIO COMMUNICATIONS,XX,XX, 1994, pages 439-443, XP000619815**

**Description**

Field of the invention

The present invention relates to CDMA technology, in particular, a method and system for maintenance of UL synchronization in CDMA based mobile communication systems.

Technical background

For most CDMA systems, the uplink channels are asynchronous. That means the signals of the users arrive at the serving Node B (the Base Station) at different time. So the asynchronous spreading codes used by different users (for example PN (pseudo noise) sequence) will interfere each other. That interference is known as Multi-Access-Interference. Since CDMA is an interference-limited system, any additional interference will result in capacity reduction. Uplink synchronization or so-called synchronous CDMA system keeps all user signals reaching the base station at the same time. It will greatly reduce Multi-Access-Interference. Thus uplink synchronization (US) will lead to higher capacity and simplify the demodulator in Node B at the base station side.

Synchronization is more difficult to realize in mobile communications system because of the multipath and shadow fading characteristic of mobile channel. Since the channel characteristic varies in time frequently and the accuracy for uplink (UL) synchronization must be high, the update frequency of the mobile's transmission TX timing must be fast. The problem is how to find an effective way to realize uplink synchronization and keep the system spending acceptable. The realization of UL synchronization can be divided into two parts: UL synchronization establishment and UL synchronization maintenance. In the invention a simple and effective method to maintain the uplink synchronization is described.

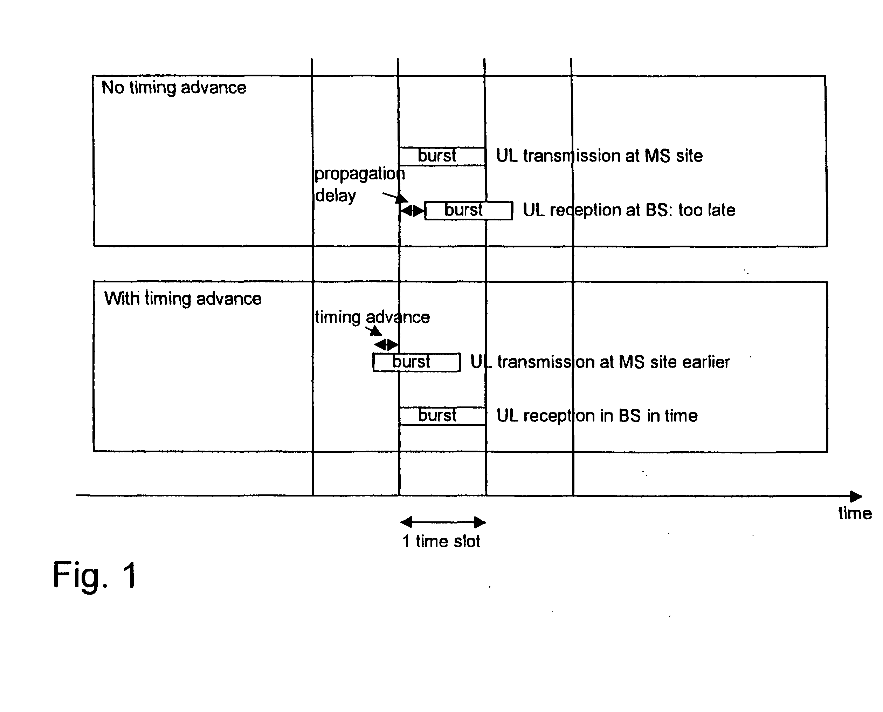

From the layer 1 point of view, the UL synchronization is equivalent to a very high precise timing advance. In current system, there exist a scheme for timing advance. Fig. 1 illustrates a schematic diagram of the timing advance scheme. As shown in Fig. 1, there is a propagation delay when the BS receives the UL transmission signal. Therefore, a timing advance is provided to the burst during UL transmission at the mobile station (MS) site, so that the burst received at the BS can be just in time.

However, in the existing timing advance scheme, the timing advance information is transmitted from layer 3. Since the accuracy for UL synchronization is higher and the update frequency is faster than timing advance, the timing advance scheme cannot meet the requirement of UL synchronization. In current mobile communications system, there is no solution for UL synchronization. Hence before the invention, the problem is open.

US 5,446,727, discloses a method and apparatus for time aligning signals for reception in a CDMA communications system, where upon reception of a signal from a subscriber unit a base station will compare the time of arrival of the received signal with a reference value and then transmit in turn a signal containing time alignment information to the subscriber unit.

EP 0 673 130, discloses a method for establishing synchronisation in a CDMA communications system between a base station and mobile users. The base station transmits a signal to the mobile users in which it has inserted a signal representative of the propagation delay and a propagation delay increment. Upon receiving this information the mobile users will adjust their spread spectrum patterns.

US 5,229,996, discloses a method for correcting time misalignment in communications between mobile stations and a base station. Synchronisation is maintained by detecting time misalignments in received communications and then providing time adjustments and then checking during two discontinuous time intervals to see whether the provided time adjustments were implemented.

"Timing Aspects of Synchronous CDMA" by R. D. J. van Nee, IEEE International Symposium on Personal, Indoor and Mobile Radio Communications, 1994, pages 439 - 443, discloses two techniques that can be used to synchronise a CDMA system for both the uplink and downlink. By using a new tracking system which estimates both line-of-sight and multipath parameters better results are obtained in the synchronisation of the uplink.

Summary of the invention

One object of the invention is to provide a method and system for maintenance of UL synchronization in CDMA based mobile communication systems with -high accuracy and fast update frequency, thereby reducing multi-access-interference effectively, achieving higher capacity of the CDMA system.

A further object of the invention is to provide a communication system utilizing the above method, and the base station and mobile station thereof.

The present invention provides a method for maintaining uplink synchronization in a mobile communication system, said mobile communication system comprising a base station, and at least one mobile station, the method comprising the steps of:

> receiving at said base station signals transmitted by said mobile station;
> measuring at said base station an actual time of reception ($US_{Actual}$) of the transmitted signals from the mobile station;
> calculating based on said measurements an optimal time of reception ($US_{Target}$), which is defined as being optimal for uplink synchronization; comparing at said base station said actual time of reception ($US_{Actual}$) and said optimal time of reception ($US_{Target}$) to generate a synchronization shift (SS) command for increasing or decreasing an actual uplink timing advance used in said mobile station; signalling at said base station said synchronization shift (SS) command in a downlink physical layer burst to said mobile station to increase or decrease said actual uplink timing advance, wherein said synchronization shift (SS) command is placed around the midamble in said signalled burst.

The present invention further provides a system for maintaining uplink synchronization in mobile communication system, said mobile communication system comprising a base station, at least one mobile station, said system comprising: receiving means for receiving signals transmitted by one of said mobile station; measuring means for measuring timing of the transmitted signals from the mobile station and obtaining $US_{Actual}$ value currently used in the mobile station; calculating means for calculating a $US_{Target}$ value based on the measurement; comparing means for comparing $US_{Actual}$ and $US_{Target}$ to generate a SS command for increasing or decreasing said $US_{Ac\text{-}tual}$; signaling means for signaling said synchronization shift (SS) command in downlink to said mobile station to increase or decrease said $US_{Actual}$.

The present invention further provides a mobile communication system, comprising:

a base station;
at least one mobile station;

wherein said base station comprises:

receiving means for receiving signals transmitted by said mobile station;
measuring means for measuring an actual time of reception ($US_{Actual}$) of the transmitted signals from the mobile station;
calculating based on said measurements an optimal time of reception ($US_{Target}$), which is defined as being optimal for uplink synchronization;
comparing means for comparing said actual time of reception ($US_{Actual}$) and said optimal time of reception ($US_{Target}$) and for generating a synchronization shift (SS) command for increasing or decreasing an actual uplink timing advance used in the mobile station;
signaling means for signaling said synchronization shift (SS) command in a downlink physical layer burst to said mobile station to increase or decrease said actual uplink timing advance, and

wherein said mobile station comprises:

adjusting means for increase or decrease said actual uplink timing advance according to said synchronization shift command (SS),

**characterised in that** said synchronization shift (SS) command is placed around the midamble in said signalled burst.

The present invention further provides a base station in a mobile communication system, comprising:

receiving means for receiving signals transmitted from at least one mobile station;
measuring means for measuring an actual time of reception ($US_{Actual}$) of the transmitted signals from said least one mobile station;
calculating based on said measurements an optimal time of reception ($US_{Target}$), which is defined as being optimal for uplink synchronization;
comparing means for comparing said actual time of reception ($US_{Actual}$) and said optimal time of reception ($US_{Target}$) and for generating a synchronization shift (SS) command for increasing or decreasing an actual uplink timing advance used in said least one mobile station;
signaling means for signaling said synchronization shift (SS) command in a downlink physical layer burst to said least one mobile station to increase or decrease said actual uplink timing advance, **characterised in that** said synchronization shift (SS) command is placed around the midamble in said signalled burst.

The present invention further provides a mobile communication system, comprising: a base station; at least one mobile station; wherein said base station comprises: receiving means for receiving signals transmitted by one of said mobile station; measuring means for measuring timing of the transmitted signals from the mobile station and obtaining $US_{Actual}$ value currently used in the mobile station; calculating means for calculating a $US_{Target}$ value based on the measurement; comparing means for comparing $US_{Actual}$ and $US_{Target}$ to generate a SS command for increasing or decreasing said $US_{Actual}$; signaling means for signaling said synchronization shift (SS) command in downlink to said mobile station to increase or decrease said $US_{Actual}$ , and wherein said mobile station comprises: adjusting means for increase or decrease said $US_{Actual}$ according to said synchronization shift command, as well as the base station and mobile station used therein.

Brief description of the drawings

Fig. 1 illustrates a schematic diagram of the timing advance scheme at L3 level.
Fig. 2 illustrates a schematic diagram of the CDMA system according to one embodiment of the present invention.

Fig. 3 illustrates a schematic diagram for examples for calculating $US_{Target}$ according to the invention.

Fig. 4 shows an example of the position of the SS (synchronization shift) command in a traffic burst.

Fig. 5 shows another example of the position of the SS(synchronization shift) command in a traffic burst when TFCI is transmitted.

Detailed description of the preferred embodiments of the invention

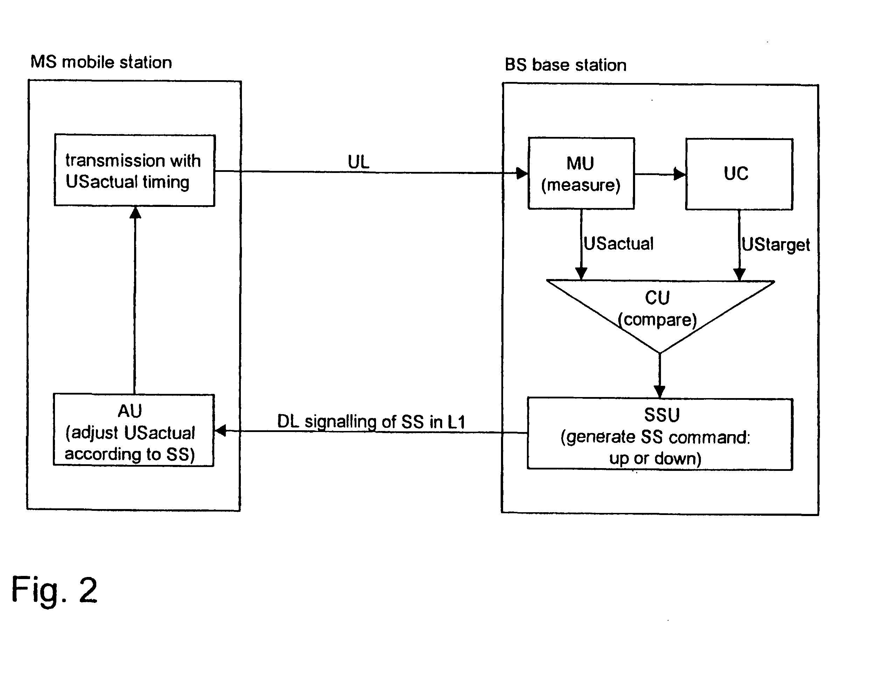

Fig. 2 illustrates a schematic diagram of the CDMA system according to one embodiment of the present invention. As shown in Fig.2, the base station receives the signals transmitted in uplink from the mobile station. The base station includes a measurement unit MU for measuring the timing of the received signals, and obtaining a $US_{Actual}$, which is a US value (equivalent to a timing advance) currently used by the mobile station; a uplink synchronization control unit UC for calculating a $US_{Target}$, which is defined as exactly that value that would be optimal for UL synchronization; a compare unit CU for comparing the $US_{Actual}$ with the $US_{Target}$; and a SS command generating unit SSU for generating a SS command according to the comparison result. The SS command is downlink signaled in Layer 1 L1 to the mobile station MS to adjust, increase or decrease the $US_{Actual}$ value used in the MS. Needless to say, the base station also includes a receiving means (not shown) for receiving signals transmitted from the MS; and a signaling means (not shown) for transmitting signals having the SS commands in downlink to the MS. They can be a known receiver or transmitter, thereby the details thereof are not described in this application. The transmission unit in the MS transmits signals with the $US_{Actual}$ timing, and the adjustment unit AU in the MS adjusts the $US_{Actual}$ value according to the SS commands.

According to the embodiment of the present invention, a new L1 (layer 1) signaling SS (synchronization shift) is used to maintain UL synchronization, The SS commands are transmitted in the downlink of the physical layer.

As shown in Fig. 2, the measurement unit in the serving node B or base station continuously measures the timing of a transmission from the user equipment, i.e., the mobile station MS. Then, based on these measurements, the UL synchronization Control UC unit calculates the $US_{Target}$. The $US_{Target}$ is defined as exactly that value that would be optimal for UL synchronization. The US value that is currently used by the system is defined as $US_{Actual}$.

The SS command is generated by the relationship between $US_{Ac\text{-}tual}$ and $US_{Target}$ and is used to increase or decrease $US_{Actual}$. Hence the SS is up- or down-command and does not signal the $US_{Target}$ itself.

The $US_{Actual}$ is changed in steps according to SS commands and one (single stepsize) or more (multiple stepsizes) predefined stepsize. The smallest stepsize is equivalent to the necessary accuracy of UL synchronization.

The process of the UL synchronization control according to an embodiment of the present invention may includes the following steps: Synchronization Control unit UC calculates a US Target; SS command is generated by comparing of $US_{Actual}$ and $US_{Target}$, wherein SS is an up- or down-command; SS command is used by the MS to increase or decrease $US_{Actual}$ in predefined step(s), which are known in advance and/or are encoded in the SS command; SS command is signaled in layer 1 L1 (SS field in Burst) to achieve the high update frequency of US.

One embodiment of the UL synchronization in the UTRA-TDD system or in the TD-SCDMA system according to the present invention will be described below.

The required accuracy for UL synchronization is, for example, $\pm 1/8$chips. The serving node B at the BS side continuously measures the timing of a transmission from the MS, obtains the $US_{Actual}$, and calculates a $US_{Target}$. Based on the comparison of the $US_{Actual}$ and the $US_{Target}$, SS commands are generated and signaled in DL. The $US_{Actual}$ used in MS is changed in steps according to SS commands, and changed one (single stepsize) or more (multiple stepsizes) predefined stepsizes.

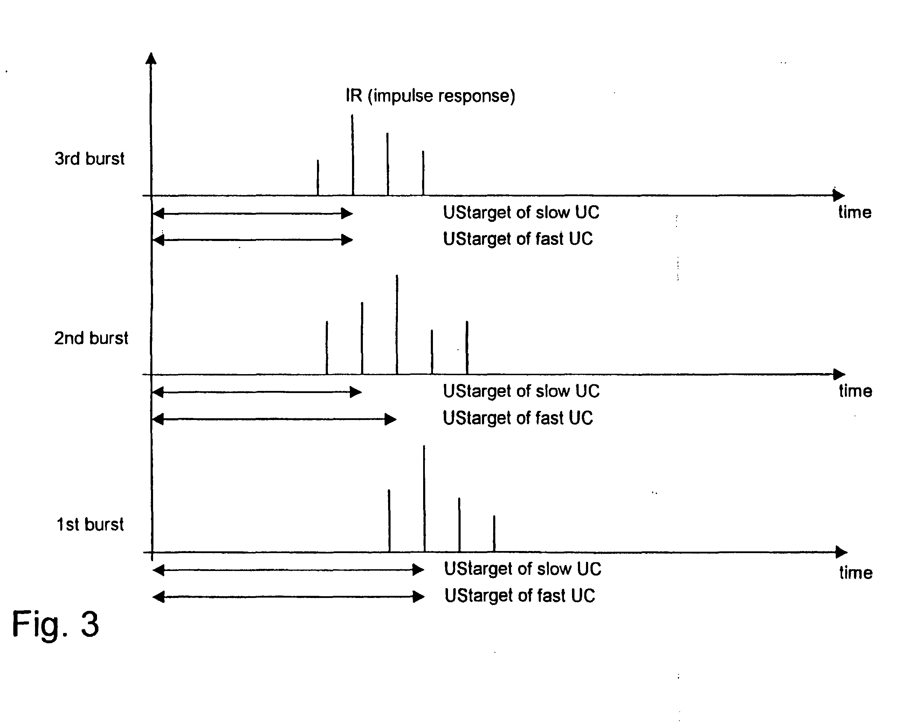

Fig. 3 illustrates a schematic diagram for explaining the calculation of the $US_{Target}$ in the UL synchronization control unit UC according to the invention.

The UC has the purpose of calculating the $US_{target}$. Because of the multipath effect and the time variance of the channel, a perfect UL synchronization cannot be established. Therefore the $US_{target}$ has the purpose to find that timing for UL transmission, where the performance of US is optimal. Two basic methods are possible, one is slow UC, the other is fast UC.

As shown in Fig. 3, from the bottom to the top, there are three bursts (for exemplary purpose) in time sequence transmitted from the MS are received at the BS. For each of the burst, the BS receives corresponding taps of impulse response IR. Since the MS is moving and is in a time variant environment, the IR at the BS side is varied in time and in power, as shown in Fig. 3.

For slow UC, which means the statistics of the IR is used to calculate an optimal value, the $US_{target}$, the $US_{target}$ is equivalent to the propagation delay plus the delay of that tap in the IR, that has the highest power in average. This method additionally includes the average characteristics of the mobile station's IR. Therefore the UC must know the statistics of the IR.

For fast UC, the $US_{target}$ is equivalent to the propagation plus the delay of that tap in the IR, that has actually the highest power. This method should provide the best performance of US, however the $US_{target}$ will rapidly change, which causes more frequent signaling of SS commands in the DL.

With either slow UC or fast UC, the value of $US_{target}$ can be obtained.

The smallest stepsize is equivalent to the necessary accuracy, for example, 1/8 Chips. The stepsize can be a fixed value pre-set in the MS. It is also possible for the BS to broadcast the stepsize to the respective mobile stations, and each of the MSs use the received stepsize to increase or decrease its $US_{Actual}$ value. The SS commands are transmitted in the physical layer, i.e., L1-signaling.

For example, the algorithm for a single stepsize is

If $US_{Actual} > US_{Target}$ , then the SS=0;

If $US_{Actual} < US_{Target}$ , then the SS=1;

In one embodiment of the invention, the SS information is one bit. More bits can be used for multiple stepsizes or error protection. Since SS commands are signaled in L1, they need a special field in the burst. The SS field is only added in DL timeslots because the transmission of SS is only needed in DL.

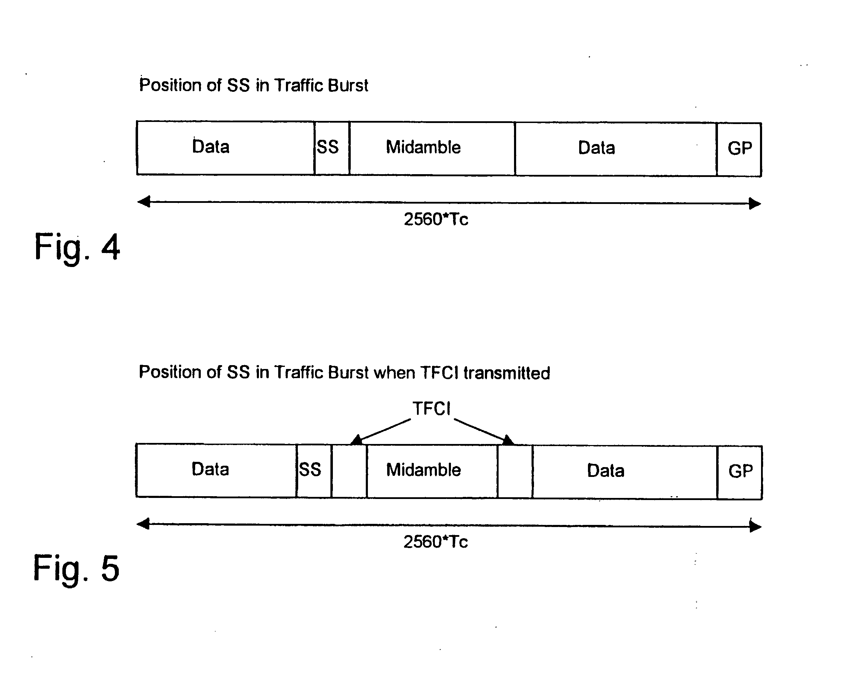

Fig. 4 and Fig.5 shows two examples of the position of the synchronization shift command SS in a traffic burst, according to the present invention.

As shown in Fig. 4, in this example, one symbol (two bits) for SS field is reserved. The SS field is placed around the midamble in order to achieve effective protection in time-variant environments. The reason for placing the SS command near the midamble is that the above measurement is made at the midamble, so that the adjustment of the US value at the MS can be more based on the real US status and more efficiently. The SS information is transmitted every frame in DL physical channel. Fig.4 shows the position of SS in traffic DL burst for UTRA (UMTS(Universal Mobile Telecommunication System) terrestrial radio access) -TDD(Time Division Duplex) system.

If TFCI (Transport Format Combination Indicator) is transmitted, The SS is transmitted directly adjacent to the TFCI. Fig. 5 shows the position of SS in traffic DL burst when TFCI is transmitted.

The adjustment of the current timing advance is changed according to the following rule:

$$US_{Actual,new} = US_{Actual,old} + \Delta_{US} \text{ If SS=1}$$

$$US_{Actual,old} - \Delta_{US} \text{ If SS=0}$$

Where, $\Delta_{US}$ is single stepsize for the modification of US. In this implementation, $\Delta_{US}$ is equal to 1/8 chips and it is predefined in the system.

From the above description to the preferred embodiments of the present invention, it is apparent that the present invention provide an effective method to maintain the uplink synchronization in CDMA based mobile communication systems with high accuracy and fast update frequency. And consequently, it will greatly reduce multi-access-interference, and lead to higher capacity of the CDMA system as well as simplify the demodulator at the base station side.

The forgoing has described the preferred embodiments of the present invention. It is contemplated that changes and modifications can be made by one of ordinary skill in the art, based on the disclosure of the present invention, without departing from the scope of the invention, which is determined by the scope of the claims appended hereto.

**Claims**

1. A method for maintaining uplink synchronization in a mobile communication system, said mobile communication system comprising a base station, and at least one mobile station, the method comprising the steps of:

   receiving at said base station signals transmitted by said mobile station;
   measuring at said base station an actual time of reception ($US_{Actual}$) of the transmitted signals from the mobile station;
   calculating based on said measurements an optimal time of reception ($US_{Target}$), which is defined as being optimal for uplink synchronization;
   comparing at said base station said actual time of reception ($US_{Actual}$) and said optimal time of reception ($US_{Target}$) to generate a synchronization shift (SS) command for increasing or decreasing an actual uplink timing advance used in said mobile station;
   signalling at said base station said synchronization shift (SS) command in a downlink physical layer burst to said mobile station to increase or decrease said actual uplink timing advance, wherein said synchronization shift (SS) command is placed around the midamble in said signalled burst.

2. The method according to claim 1, wherein said measurement is made at the midamble.

3. The method according to claim 1, wherein said synchronization shift (SS) command is transmitted every frame in a physical channel.

4. The method according to claim 1, wherein the channel statistics is used to calculate said optimal time of reception ($US_{Target}$) in said calculating step.

5. The method according to claim 1, wherein a tap in impulse response having actually the highest power is used to determine said optimal time of reception

($US_{Target}$) in said calculating step.

6. The method according to claim 1, wherein said mobile station increases or decreases the actual uplink timing advance according to said synchronization shift (SS) command in a predetermined stepsize or stepsizes.

7. The method according to claim 6, wherein said stepsize is a fixed value preset in said mobile station.

8. The method according to claim 7, wherein said mobile station receives the stepsize broadcasted from said base station.

9. A mobile communication system, comprising:

   a base station;
   at least one mobile station;

   wherein said base station comprises:

   receiving means for receiving signals transmitted by said mobile station;
   measuring means for measuring an actual time of reception ($US_{Actual}$) of the transmitted signals from the mobile station;
   calculating based on said measurements an optimal time of reception ($US_{Target}$), which is defined as being optimal for uplink synchronization;
   comparing means for comparing said actual time of reception ($US_{Actual}$) and said optimal time of reception ($US_{Target}$) and for generating a synchronization shift (SS) command for increasing or decreasing an actual uplink timing advance used in the mobile station;
   signaling means for signaling said synchronization shift (SS) command in a downlink physical layer burst to said mobile station to increase or decrease said actual uplink timing advance, and

   wherein said mobile station comprises:

   adjusting means for increasing or decreasing said actual uplink timing advance according to said synchronization shift command (SS),

   **characterised in that** said synchronization shift (SS) command is placed around the midamble in said signalled burst.

10. The communication system according to claim 9, wherein said measurement is made at the midamble.

11. The communication system according to claim 9, wherein said synchronization shift (SS) command is transmitted every frame in a physical channel.

12. The communication system according to claim 9, wherein the channel statistics is used to calculate said optimal time of reception ($US_{Target}$) in said calculating step.

13. The communication system according to claim 9, wherein a tap in impulse response having actually the highest power is used to determine said optimal time of reception ($US_{Target}$) in said calculating step.

14. The communication system according to claim 9, wherein said mobile station includes an adjusting means for increasing or decreasing said actual uplink timing advance according to said synchronization shift (SS) command in a predetermined stepsize or stepsizes.

15. The communication system according to claim 14, wherein said stepsize is a fixed value preset in said mobile station.

16. The communication system according to claim 15, wherein said mobile station receives the stepsize broadcasted from said base station.

17. A base station in a mobile communication system, comprising:

   receiving means for receiving signals transmitted from at least one mobile station;
   measuring means for measuring an actual time of reception ($US_{Actual}$) of the transmitted signals from said least one mobile station;
   calculating based on said measurements an optimal time of reception ($US_{Target}$), which is defined as being optimal for uplink synchronization;
   comparing means for comparing said actual time of reception ($US_{Actual}$) and said optimal time of reception ($US_{Target}$) and for generating a synchronization shift (SS) command for increasing or decreasing an actual uplink timing advance used in said least one mobile station;
   signaling means for signaling said synchronization shift (SS) command in a downlink physical layer burst to said least one mobile station to increase or decrease said actual uplink timing advance, **characterised in that** said synchronization shift (SS) command is placed around the midamble in said signalled burst.

18. The base station according to claim 17, wherein said measurement is made at the midamble.

**19.** The base station according to claim 18, wherein said synchronization shift (SS) command is transmitted every frame in a physical channel.

**20.** The base station according to claim 19, wherein the channel statistics is used to calculate said optimal time of reception ($US_{Target}$) in said calculating step.

**21.** The base station according to claim 17, wherein a tap in impulse response having actually the highest power is used to determine said optimal time of reception ($US_{Target}$) in said calculating step.

**Patentansprüche**

**1.** Verfahren zur Aufrechterhaltung der Aufwärtssynchronisation in einem Mobilfunksystem, wobei das besagte Mobilfunksystem eine Basisstation und wenigstens eine Mobilstation umfasst, wobei das Verfahren die folgenden Schritte umfasst:

Empfangen von Signalen, die von der besagten Mobilstation gesendet wurden, an der besagten Basisstation; Messen eines Istzeitpunkts des Empfangs ($US_{Ist}$) der gesendeten Signale von der Mobilstation an der besagten Basisstation; Berechnen eines optimalen Zeitpunkts des Empfangs ($US_{Ziel}$) auf Basis der besagten Messungen, der als optimal für die Aufwärtssynchronisation definiert ist; Vergleichen des besagten Istzeitpunkts des Empfangs ($US_{Ist}$) und eines optimalen Zeitpunkts des Empfangs ($US_{Ziel}$) an der besagten Basisstation, um einen Synchronisationsverschiebungs- (SS) Befehl zum Erhöhen oder Verringern einer aktuellen Vorhaltezeit der Aufwärtsstrecke, die in der besagten Mobilstation verwendet wird, zu erzeugen; Signalisieren des besagten Synchronisationsverschiebungs- (SS) Befehls von der besagten Basisstation in einem Funkblock der physikalischen Schicht der Abwärtsstrecke an die besagte Mobilstation, um die besagte aktuelle Vorhaltezeit der Aufwärtsstrecke zu erhöhen oder zu verringern, wobei der besagte Synchronisationsverschiebungs- (SS-) Befehl in dem besagten signalisierten Funkblock um die Mittambel herum angeordnet ist.

**2.** Verfahren nach Anspruch 1, wobei die besagte Messung an der Mittambel vorgenommen wird.

**3.** Verfahren nach Anspruch 1, wobei der besagte Synchronisationsverschiebungs- (SS) Befehl in jedem Rahmen in einem physikalischen Kanal gesendet wird.

**4.** Verfahren nach Anspruch 1, wobei die statistischen Daten des Kanals in dem besagten Berechnungsschritt verwendet werden, um den besagten optimalen Zeitpunkt des Empfangs ($US_{Ziel}$) zu berechnen.

**5.** Verfahren nach Anspruch 1, wobei ein Tap in einer Impulsantwort, der derzeit die höchste Leistung aufweist, in dem besagten Berechnungsschritt verwendet wird, um den besagten optimalen Zeitpunkt des Empfangs ($US_{Ziel}$) zu bestimmen.

**6.** Verfahren nach Anspruch 1, wobei die besagte Mobilstation die aktuelle Vorhaltezeit der Aufwärtsstrecke entsprechend dem besagten Synchronisationsverschiebungs- (SS) Befehl mit einer vorgegebenen Schrittweite oder den vorgegebenen Schrittweiten erhöht oder verringert.

**7.** Verfahren nach Anspruch 6, wobei die besagte Schrittweite ein fester Wert ist, der in der besagten Mobilstation voreingestellt ist.

**8.** Verfahren nach Anspruch 7, wobei die besagte Mobilstation die Schrittweite empfängt, die von der besagten Basisstation rundgesendet wird.

**9.** Mobilfunksystem, das folgendes umfasst:

eine Basisstation; wenigstens eine Mobilstation;

wobei die besagte Basisstation folgendes umfasst:

Empfangsmittel zum Empfangen von Signalen, die von der besagten Mobilstation gesendet werden; Messmittel zum Messen eines Istzeitpunkts des Empfangs ($US_{Ist}$) der gesendeten Signale von der Mobilstation; Berechnungsmittel zum Berechnen eines optimalen Zeitpunktes des Empfangs ($US_{Ziel}$) auf Basis der besagten Messungen, der als optimal für die Aufwärtssynchronisation definiert ist; Vergleichsmittel zum Vergleichen des besagten Istzeitpunktes des Empfangs ($US_{Ist}$) und eines optimalen Zeitpunktes des Empfangs ($US_{Ziel}$) und zum Erzeugen eines Synchronisationsverschiebungs- (SS) Befehls zum Erhöhen oder Verringern einer aktuellen VorhaltezeitT der Aufwärtsstrecke, die in der Mobilstation verwendet wird; Signalisierungsmittel zum Signalisieren des besagten Synchronisationsverschiebungs- (SS) Befehls in einem Funkblock der physikalischen Schicht der Abwärtsstrecke an die besagte Mobilstation, um die besagte aktuelle Vorhaltezeit der Aufwärtsstrecke zu erhöhen oder zu verringern, und

wobei die besagte Mobilstation folgendes umfasst:

Anpassungsmittel zum Erhöhen oder Verringern der besagten aktuellen Vorhaltezeit der Aufwärtsstrecke entsprechend dem besagten Synchronisationsverschiebungs- (SS) Befehl,

**dadurch gekennzeichnet, dass** der besagte Synchronisationsverschiebungs- (SS) Befehl in dem besagten signalisierten Funkblock um die Mittambel herum angeordnet ist.

10. Kommunikationssystem nach Anspruch 9, wobei die besagte Messung an der Mittambel vorgenommen wird.

11. Kommunikationssystem nach Anspruch 9, wobei der besagte Synchronisationsverschiebungs- (SS) Befehl in jedem Rahmen in einem physikalischen Kanal gesendet wird.

12. Kommunikationssystem nach Anspruch 9, wobei die statistischen Daten des Kanals in dem besagten Berechnungsschritt verwendet werden, um den besagten optimalen Zeitpunkt des Empfangs (US$_{Ziel}$) zu berechnen.

13. Kommunikationssystem nach Anspruch 9, wobei ein Tap in einer Impulsantwort, der derzeit die höchste Leistung aufweist, in dem besagten Berechnungsschritt verwendet wird, um den besagten optimalen Zeitpunkt des Empfangs (US$_{Ziel}$) zu bestimmen.

14. Kommunikationssystem nach Anspruch 9, wobei die besagte Mobilstation ein Anpassungsmittel zum Erhöhen oder Verringern der besagten aktuellen Vorhaltezeit der Aufwärtsstrecke entsprechend dem besagten Synchronisationsverschiebungs- (SS) Befehl mit einer vorgegebenen Schrittweite oder den vorgegebenen Schrittweiten umfasst.

15. Kommunikationssystem nach Anspruch 14, wobei die besagte Schrittweite ein fester Wert ist, der in der besagten Mobilstation voreingestellt ist.

16. Kommunikationssystem nach Anspruch 15, wobei die besagte Mobilstation die Schrittweite empfängt, die von der besagten Basisstation rundgesendet wird.

17. Basisstation in einem Mobilfunksystem, die folgendes umfasst:

Empfangsmittel zum Empfangen von Signalen, die von wenigstens einer Mobilstation gesendet werden;
Messmittel zum Messen eines Istzeitpunktes des Empfangs (US$_{Ist}$) der gesendeten Signale von der besagten wenigstens einen Mobilstation;
Berechnungsmittel zum Berechnen eines optimalen Zeitpunktes des Empfangs (US$_{Ziel}$) auf Basis der besagten Messungen, der als optimal für die Aufwärtssynchronisation definiert ist; Vergleichsmittel zum Vergleichen des besagten Istzeitpunktes des Empfangs (US$_{Ist}$) und eines optimalen Zeitpunktes des Empfangs (US$_{Ziel}$) und zum Erzeugen eines Synchronisationsverschiebungs- (SS) Befehls zum Erhöhen oder Verringern einer aktuellen Vorhaltezeit der Aufwärtsstrecke, die in der besagten wenigstens einen Mobilstation verwendet wird;
Signalisierungsmittel zum Signalisieren des besagten Synchronisationsverschiebungs- (SS) Befehls in einem Funkblock der physikalischen Schicht der Abwärtsstrecke an die besagte wenigstens eine Mobilstation, um die besagte aktuelle Vorhaltezeit der Aufwärtsstrekke zu erhöhen oder zu verringern,

**dadurch gekennzeichnet, dass** der besagte Synchronisationsverschiebungs- (SS) Befehl in dem besagten signalisierten Burst um die Mittambel herum angeordnet ist.

18. Basisstation nach Anspruch 17, wobei die besagte Messung an der Mittambel vorgenommen wird.

19. Basisstation nach Anspruch 18, wobei der besagte Synchronisationsverschiebungs- (SS) Befehl in jedem Frame in einem physikalischen Kanal gesendet wird.

20. Basisstation nach Anspruch 19, wobei die statistischen Daten des Kanals in dem besagten Berechnungsschritt verwendet werden, um den besagten optimalen Zeitpunkt des Empfangs (US$_{Ziel}$) zu berechnen.

21. Basisstation nach Anspruch 17, wobei ein Tap in einer Impulsantwort, der derzeit die höchste Leistung aufweist, in dem besagten Berechnungsschritt verwendet wird, um den besagten optimalen Zeitpunkt des Empfangs (US$_{Ziel}$) zu bestimmen.

## Revendications

1. Procédé de maintien de la synchronisation de liaison montante dans un système de communications mobiles, ledit système de communications mobiles comprenant une station de base, et au moins une station mobile, le procédé comprenant les étapes :

recevoir, au niveau de ladite station de base, des signaux émis de ladite station mobile;
mesurer, au niveau de ladite station de base, un temps réel de réception ($SM_{Réelle}$) des signaux émis de la station mobile;
calculer, sur la base desdites mesures, un temps optimal de réception ($SM_{Cible}$), qui est défini comme étant optimal pour une synchronisation de liaison montante;
comparer, au niveau de ladite station de base, ledit temps réel de réception ($SM_{Réelle}$) et ledit temps optimal de réception ($SM_{Cible}$) pour produire une commande de décalage de synchronisation (DS) en vue d'augmenter ou de diminuer une avance de synchronisation de liaison montante réelle utilisée dans ladite station mobile;
signaler, au niveau de ladite station de base, ladite commande de décalage de synchronisation (DS) dans une rafale de couche physique de liaison descendante vers ladite station mobile en vue d'augmenter ou de diminuer ladite avance de synchronisation de liaison montante réelle, dans lequel ladite commande de décalage de synchronisation (DS) est placée autour du midamble dans ladite rafale signalée.

2. Procédé selon la revendication 1, dans lequel ladite mesure est réalisée au niveau du midamble.

3. Procédé selon la revendication 1, dans lequel ladite commande de décalage de synchronisation (DS) est transmise chaque trame dans un canal physique.

4. Procédé selon la revendication 1, dans lequel les statistiques de canal sont utilisées pour calculer ledit temps optimal de réception ($SM_{Cible}$) à ladite étape de calcul.

5. Procédé selon la revendication 1, dans lequel un pic dans une réponse impulsionnelle ayant réellement la puissance la plus élevée est utilisé pour déterminer ledit temps optimal de réception ($SM_{Cible}$) à ladite étape de calcul.

6. Procédé selon la revendication 1, dans lequel ladite station mobile augmente ou diminue l'avance de synchronisation de liaison montante réelle conformément à ladite commande de décalage de synchronisation (DS) avec un pas ou des pas prédéterminé(s).

7. Procédé selon la revendication 6, dans lequel ledit pas est une valeur fixe préétablie dans ladite station mobile.

8. Procédé selon la revendication 7, dans lequel ladite station mobile reçoit le pas diffusé à partir de ladite station de base.

9. Système de communications mobiles, comprenant :

une station de base;
au moins une station mobile;

dans lequel ladite station de base comprend :

un moyen de réception pour recevoir les signaux émis par ladite station mobile;
un moyen de mesure pour mesurer un temps réel de réception ($SM_{Réelle}$) des signaux émis de la station mobile;
un moyen de calcul pour calculer, sur la base desdites mesures, un temps optimal de réception ($SM_{Cible}$), qui est défini comme étant optimal pour une synchronisation de liaison montante;
un moyen de comparaison pour comparer ledit temps réel de réception ($SM_{Réelle}$) et ledit temps optimal de réception ($SM_{Cible}$) et pour produire une commande de décalage de synchronisation (DS) en vue d'augmenter ou de diminuer une avance de synchronisation de liaison montante réelle utilisée dans la station mobile;
un moyen de signalisation pour signaler ladite commande de décalage de synchronisation (DS) dans une rafale de couche physique de liaison descendante vers ladite station mobile en vue d'augmenter ou de diminuer ladite avance de synchronisation de liaison montante réelle, et
dans lequel ladite station mobile comprend :

un moyen d'ajustement pour augmenter ou diminuer ladite avance de synchronisation de liaison montante réelle conformément à ladite commande de décalage de synchronisation (DS),

**caractérisé en ce que** ladite commande de décalage de synchronisation (DS) est placée autour du midamble dans ladite rafale signalée.

10. Système de communications selon la revendication 9, dans lequel ladite mesure est réalisée au niveau du midamble.

11. Système de communications selon la revendication 9, dans lequel ladite commande de décalage de synchronisation (DS) est transmise chaque trame dans un canal physique.

**12.** Système de communications selon la revendication 9, dans lequel les statistiques de canal sont utilisées pour calculer ledit temps optimal de réception (SM$_{Cible}$) à ladite étape de calcul.

**13.** Système de communications selon la revendication 9, dans lequel un pic dans une réponse impulsionnelle ayant réellement la puissance la plus élevée est utilisée pour déterminer ledit temps optimal de réception (SM$_{Cible}$) à ladite étape de calcul.

**14.** Système de communications selon la revendication 9, dans lequel ladite station mobile comprend un moyen d'ajustement pour augmenter ou diminuer ladite avance de synchronisation de liaison montante réelle conformément à ladite commande de décalage de synchronisation (DS) avec un pas ou des pas prédéterminé(s).

**15.** Système de communications selon la revendication 14, dans lequel ledit pas est une valeur fixe préétablie dans ladite station mobile.

**16.** Système de communications selon la revendication 15, dans lequel ladite station mobile reçoit le pas diffusé à partir de ladite station de base.

**17.** Station de base dans un système de communications mobiles, comprenant :

un moyen de réception pour recevoir des signaux émis d'au moins une station mobile;
un moyen de mesure pour mesurer un temps réel de réception (SM$_{Réelle}$) des signaux émis de ladite au moins une station mobile;
un moyen de calcul pour calculer, sur la base desdites mesures, un temps optimal de réception (SM$_{Cible}$), qui est défini comme étant optimal pour une synchronisation de liaison montante;
un moyen de comparaison pour comparer ledit temps réel de réception (SM$_{Réelle}$) et ledit temps optimal de réception (SM$_{Cible}$) et pour produire une commande de décalage de synchronisation (DS) en vue d'augmenter ou de diminuer une avance de synchronisation de liaison montante réelle utilisée dans ladite au moins une station mobile;
un moyen de signalisation pour signaler ladite commande de décalage de synchronisation (DS) dans une rafale de couche physique de liaison descendante vers ladite au moins une station mobile en vue d'augmenter ou de diminuer ladite avance de synchronisation de liaison montante réelle,

**caractérisée en ce que** ladite commande de décalage de synchronisation (DS) est placée autour du midamble dans ladite rafale signalée.

**18.** Station de base selon la revendication 17, dans laquelle ladite mesure est réalisée au niveau du midamble.

**19.** Station de base selon la revendication 18, dans laquelle ladite commande de décalage de synchronisation (DS) est transmise chaque trame dans un canal physique.

**20.** Station de base selon la revendication 19, dans laquelle les statistiques de voie sont utilisées pour calculer ledit temps optimal de réception (SM$_{Cible}$) à ladite étape de calcul.

**21.** Station de base selon la revendication 17, dans laquelle un pic dans une réponse impulsionnelle ayant réellement la puissance la plus élevée est utilisée pour déterminer ledit temps optimal de réception (SM$_{Cible}$) à ladite étape de calcul.

Fig. 1

EP 1 230 751 B1

MS mobile station

BS base station

transmission with USactual timing

UL

MU (measure)

UC

USactual

UStarget

CU (compare)

AU (adjust USactual according to SS)

DL signalling of SS in L1

SSU (generate SS command: up or down)

Fig. 2

EP 1 230 751 B1

EP 1 230 751 B1

IR (impulse response)

3rd burst

time

UStarget of slow UC

UStarget of fast UC

2nd burst

time

UStarget of slow UC

UStarget of fast UC

1st burst

time

UStarget of slow UC

UStarget of fast UC

# Fig. 3

Position of SS in Traffic Burst

| Data | SS | Midamble | Data | GP |
|------|----|----------|------|-----|

$\longleftrightarrow$
2560*Tc

## Fig. 4

Position of SS in Traffic Burst when TFCI transmitted

TFCI

| Data | SS | | Midamble | | Data | GP |
|------|----|----|----------|----|------|-----|

$\longleftrightarrow$
2560*Tc

## Fig. 5